# EUROPEAN PATENT APPLICATION

(11) **EP 1 710 993 A1**
(43) Date of publication of application: **11.10.2006**
(21) Application number: 06112390.7
(22) Date of filing: 07.04.2006
(51) Int. Cl.: H04M 3/493

(54) **Method and apparatus for establishing a call in a packet network**

(30) Priority: 07.04.2005 US 101342
(71) Applicant: AT&T Corp., New York, NY 10013-2412 (US)
(72) Inventor: Croak, Marian, Fair Haven, NJ 07704 (US); Eslambolchi, Hossein, Los Altos Hills, CA 94022 (US)
(74) Representative: Asquith, Julian Peter

(57) **Abstract**

Method and apparatus for establishing a call in a packet network is described. In one example, a first call is received to a virtual phone number (304). At least one voice command is received in response to the first call (306). A requested phone number is identified in response to the at least one voice command (308). A second call to the requested phone number is initiated (370). For example, voicemail data may be provided in response to the at least one voice command and the requested number may be associated with an originator of a voicemail message in the voicemail data. The voicemail message may be scanned using a voice recognition process to obtain the requested number. In another example, personal contact data associated with the virtual phone number and registered with the packet network may be parsed to obtain the requested phone number.

## Description

### BACKGROUND OF THE INVENTION

### Field of the Invention

Embodiments of the present invention generally relate to telecommunications systems and, more particularly, to a method and apparatus for establishing a call in a packet network.

### Description of the Related Art

Generally, telecommunications systems provide the ability for two or more people or machines (e.g., computerized or other electronic devices) to communicate with each other. A telecommunications system may include various networks for facilitating communication that may be generally organized into packet networks and circuit-switched networks. An exemplary circuit-switched network includes a plain old telephone system (POTS), such as the publicly switched telephone network (PSTN). Exemplary packet networks include internet protocol (IP) networks, asynchronous transfer mode (ATM) networks, frame-relay networks, and the like. One type of packet network is a voice-over-internet protocol (VOIP) network.

Providers of VOIP telephony services typically offer users advanced telephony features that give them greater control over the management of inbound and outbound calls. For example, such advanced features include "click-to-dial" services where a user uses a pointing device (e.g., mouse or keypad) to select a phone number to dial, as well as "find me/follow me" services where a user can have calls to one endpoint device be forwarded to other endpoint devices. Typically, use of such advanced telephony features is confined to a specific set of endpoint devices of the user (i.e., specific access technology). For example, a user may only be able to access a "click-to-dial" service using a computer. It is desirable to allow a user to use such advanced telephony features using any type of access technology. Accordingly, there exists a need in the art for an improved method and apparatus for establishing a call in a packet network.

### SUMMARY OF THE INVENTION

Method and apparatus for establishing a call in a packet network is described. In one embodiment, a first call is received to a virtual phone number. At least one voice command is received in response to the first call. A requested phone number is identified in response to the at least one voice command. A second call to the requested phone number is initiated. For example, voicemail data may be provided in response to the at least one voice command and the requested number may be associated with an originator of a voicemail message in the voicemail data. The voicemail message may be scanned using a voice recognition process to obtain the requested number. In another example, personal contact data associated with the virtual phone number and registered with the packet network may be parsed to obtain the requested phone number.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.

FIG. 1 is a block diagram depicting an exemplary embodiment of a communication system in accordance with the invention;

FIG. 2 is a block diagram depicting an exemplary configuration of the communication system of FIG. 1 constructed in accordance with one or more aspects of the invention;

FIG. 3 is a flow diagram depicting an exemplary embodiment of a method for establishing a call in a packet network in accordance with one or more aspects of the invention; and

FIG. 4 is a block diagram depicting an exemplary embodiment of a computer suitable for implementing the processes and methods described herein.

### DETAILED DESCRIPTION

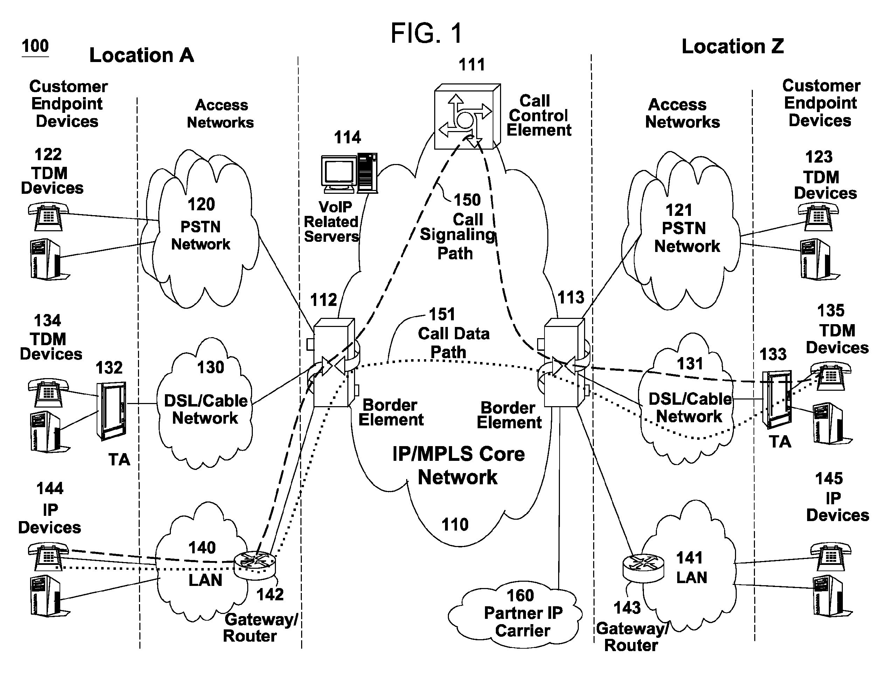

To better understand the present invention, FIG. 1 illustrates an example network, e.g., a packet network such as a VolP network related to the present invention. Exemplary packet networks include internet protocol (IP) networks, asynchronous transfer mode (ATM) networks, frame-relay networks, and the like. An IP network is broadly defined as a network that uses Internet Protocol to exchange data packets. Thus, a VolP network or a SolP (Service over Internet Protocol) network is considered an IP network.

In one embodiment, the VolP network may comprise various types of customer endpoint devices connected via various types of access networks to a carrier (a service provider) VolP core infrastructure over an Internet Protocol/Multi-Protocol Label Switching (IP/MPLS) based core backbone network. Broadly defined, a VolP network is a network that is capable of carrying voice signals as packetized data over an IP network. The present invention is described below in the context of an illustrative VolP network. Thus, the present invention should not be interpreted to be limited by this particular illustrative architecture.

Referring to FIG. 1, the customer endpoint devices can be either Time Division Multiplexing (TDM) based or IP based. TDM based customer endpoint devices 122, 123, 134, and 135 typically comprise of TDM phones or Private Branch Exchange (PBX). IP based customer endpoint devices 144 and145 typically comprise IP phones or PBX. The Terminal Adaptors (TA) 132 and 133 are used to provide necessary interworking functions between TDM customer endpoint devices, such as analog phones, and packet based access network technologies, such as Digital Subscriber Loop (DSL) or Cable broadband access networks. TDM based customer endpoint devices access VolP services by using either a Public Switched Telephone Network (PSTN) 120, 121 or a broadband access network via a TA 132 or 133. IP based customer endpoint devices access VolP services by using a Local Area Network (LAN) 140 and 141 with a VolP gateway or router 142 and 143, respectively.

The access networks can be either TDM or packet based. A TDM PSTN 120 or 121 is used to support TDM customer endpoint devices connected via traditional phone lines. A packet based access network, such as Frame Relay, ATM, Ethernet or IP, is used to support IP based customer endpoint devices via a customer LAN, e.g., 140 with a VolP gateway and router 142. A packet based access network 130 or 131, such as DSL or Cable, when used together with a TA 132 or 133, is used to support TDM based customer endpoint devices.

The core VolP infrastructure comprises of several key VolP components, such the Border Element (BE) 112 and 113, the Call Control Element (CCE) 111, and VolP related servers 114. The BE resides at the edge of the VolP core infrastructure and interfaces with customers endpoints over various types of access networks. BEs may also be referred to as "edge components." A BE is typically implemented as a Media Gateway and performs signaling, media control, security, and call admission control and related functions. The CCE resides within the VolP infrastructure and is connected to the BEs using the Session Initiation Protocol (SIP) over the underlying IP/MPLS based core backbone network 110. The CCE is typically implemented as a Media Gateway Controller and performs network wide call control related functions as well as interacts with the appropriate VoIP service related servers when necessary. The CCE functions as a SIP back-to-back user agent and is a signaling endpoint for all call legs between all BEs and the CCE. The CCE may need to interact with various VolP related servers in order to complete a call that require certain service specific features, e.g. translation of an E.164 voice network address into an IP address.

For calls that originate or terminate in a different carrier, they can be handled through the PSTN 120 and 121 or the Partner IP Carrier 160 interconnections. For originating or terminating TDM calls, they can be handled via existing PSTN interconnections to the other carrier. For originating or terminating VolP calls, they can be handled via the Partner IP carrier interface 160 to the other carrier.

In order to illustrate how the different components operate to support a VolP call, the following call scenario is used to illustrate how a VolP call is setup between two customer endpoints. A customer using IP device 144 at location A places a call to another customer at location Z using TDM device 135. During the call setup, a setup signaling message is sent from IP device 144, through the LAN 140, the VolP Gateway/Router 142, and the associated packet based access network, to BE 112. BE 112 will then send a setup signaling message, such as a SIP-INVITE message if SIP is used, to CCE 111. CCE 111 looks at the called party information and queries the necessary VolP service related server 114 to obtain the information to complete this call. If BE 113 needs to be involved in completing the call; CCE 111 sends another call setup message, such as a SIP-INVITE message if SIP is used, to BE 113. Upon receiving the call setup message, BE 113 forwards the call setup message, via broadband network 131, to TA 133. TA 133 then identifies the appropriate TDM device 135 and rings that device. Once the call is accepted at location Z by the called party, a call acknowledgement signaling message, such as a SIP-ACK message if SIP is used, is sent in the reverse direction back to the CCE 111. After the CCE 111 receives the call acknowledgement message, it will then send a call acknowledgement signaling message, such as a SIP-ACK message if SIP is used, toward the calling party. In addition, the CCE 111 also provides the necessary information of the call to both BE 112 and BE 113 so that the call data exchange can proceed directly between BE 112 and BE 113. The call signaling path 150 and the call data path 151 are illustratively shown in FIG. 1. Note that the call signaling path and the call data path are different because once a call has been setup up between two endpoints, the CCE 111 does not need to be in the data path for actual direct data exchange.

Note that a customer in location A using any endpoint device type with its associated access network type can communicate with another customer in location Z using any endpoint device type with its associated network type as well. For instance, a customer at location A using IP customer endpoint device 144 with packet based access network 140 can call another customer at location Z using TDM endpoint device 123 with PSTN access network 121. The BEs 112 and 113 are responsible for the necessary signaling protocol translation, e.g., SS7 to and from SIP, and media format conversion, such as TDM voice format to and from IP based packet voice format.

In one embodiment, subscribers of the communication system in FIG. 1 may be provided with a "virtual phone number." A virtual phone number is associated with a subscriber in general and not with any one particular endpoint device. Subscriber may use their virtual phone numbers to access telephony features of the network using any access technology (e.g., PSTN, DSL/Cable, LAN, cellular telephone, and the like) and any type of endpoint device (e.g., computer, IP phone, TDM phone, cellular phone, and the like). In one embodiment, subscribers may call their virtual phone numbers and place voice commands for checking voice mail and/or placing outbound calls.

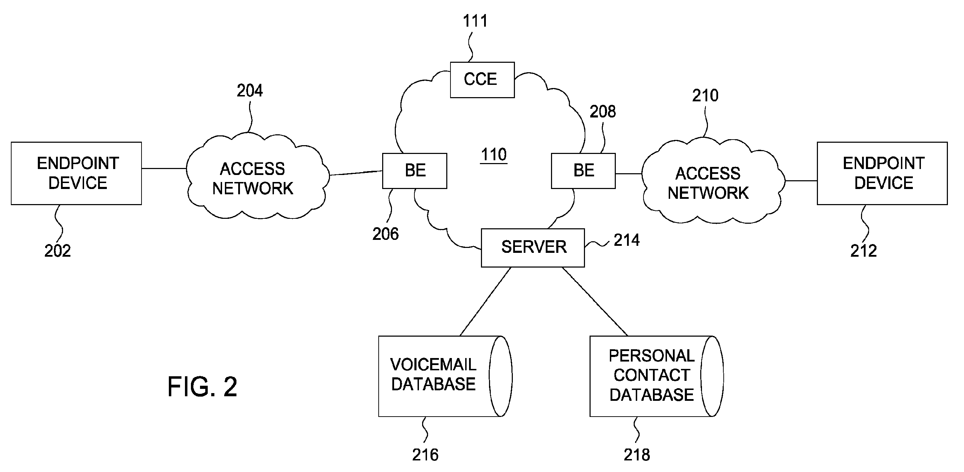

In particular, FIG. 2 is a block diagram depicting an exemplary configuration of the communication system of FIG. 1 constructed in accordance with one or more aspects of the invention. An endpoint device 202 is configured for communication with the core network 110 via an access network 204 and a border element (BE) 206. An endpoint device 212 is configured for communication with the core network 110 via an access network 210 and a BE 208. The endpoint device 202 and the endpoint device 212 may comprise any of the customer endpoint devices described above (e.g., TDM devices, IP devices, etc.). The access networks 204 and 210 may comprise any of the access networks described above (e.g., PSTN, DSL/Cable, LAN, etc).

The core network 110 further includes a server 214 in communication with a voicemail database 216 and a personal contact database 218. The voicemail database 216 manages subscriber voicemail services and stores voicemail messages. The voicemail database 216 is well known in the art. The personal contact database 218 is configured to store personal contact data for subscribers. For example, personal contact data for a subscriber may comprise a plurality of names associated with a respective plurality of phone numbers (e.g., John Smith, 555-2121). Subscribers may register their personal contact data with the network 110, which is then stored in the personal contact database 218.

In operation, the endpoint device 202 is used to call the virtual number for a subscriber to access the voicemail database 216 and the personal contact database 218. The call control element (CCE) 111 recognizes the dialed number as a virtual number for the subscriber. The CCE 111 connects the call to the server 214. The CCE 111 may authenticate the caller before connecting the call to the server 214. Alternatively, the server 214 may authenticate the caller upon connection. For example, a subscriber may be prompted to enter a pin code or other type of password before accessing voicemail and/or personal contact data. Once connected to the server 214, the subscriber may issue one or more voice commands to access voicemail and/or make outbound calls. The server 214 employs a voice recognition process to process the voice commands (e.g., voice recognition software). Such voice recognition processes are well-known in the art.

In one embodiment, a subscriber may issue a voice command to access personal contact data and make an outbound call. In response to the voice command, the server 214 parses the personal contact data associated with the virtual number to obtain the requested phone number. The server 214 then instructs the CCE 111 to setup a call using the requested phone number using the call setup process described above. For example, the subscriber may ask the network to dial "home", or dial "John on his cell phone", or "find John". In the last example, the personal contact data for the subscriber may include multiple phone numbers for John. The server 214 is configured to continue dialing phone numbers until the numbers are exhausted or a connection is established. In another embodiment, a subscriber may issue a voice command to access voicemail data. Having listened to various voicemail messages, the subscriber may issue another voice command to call the originator of a voicemail message. In yet another embodiment, the server 214 may scan voicemail messages using a voice recognition process to identify any return phone numbers. The subscriber may issue a voice command to initiate a call to such identified return phone numbers. Those skilled in the art will appreciate that various other types of voice commands may be issued to access various types of telephony features associated with placing outbound calls. In general, a requested phone number is identified in response to at least one voice command and a call is initiated to the requested phone number.

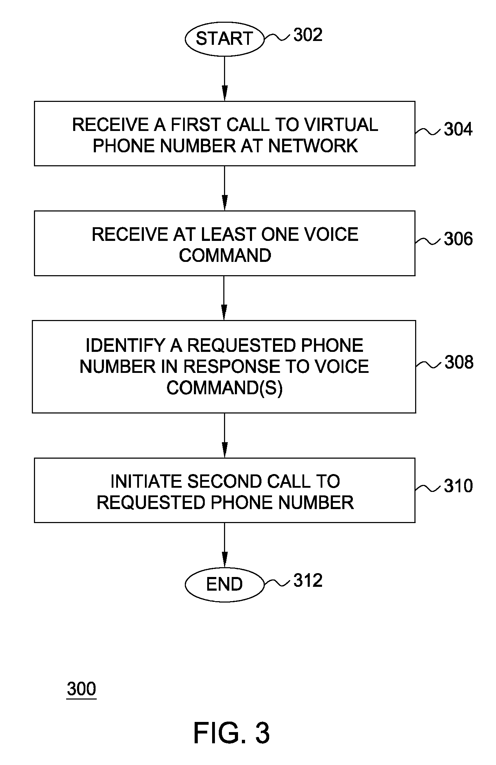

FIG. 3 is a flow diagram depicting an exemplary embodiment of a method 300 for establishing a call in a packet network in accordance with one or more aspects of the invention. The method 300 begins at step 302. At step 304, a first call to a virtual phone number is received by the network. A subscriber may call the virtual number using any type of access technology and endpoint device. At step 306, at least one voice command is received. At step 308, a requested phone number is identified in response to the voice command(s). For example, a requested phone number may be obtained by identifying the originator of a voicemail message. A requested phone number may be obtained by scanning a voicemail message using a voice recognition process. A requested phone number may be obtained by parsing personal contact data associated with the virtual phone number. At step 310, a second call to the requested phone number is initiated. The method 300 ends at step 312.

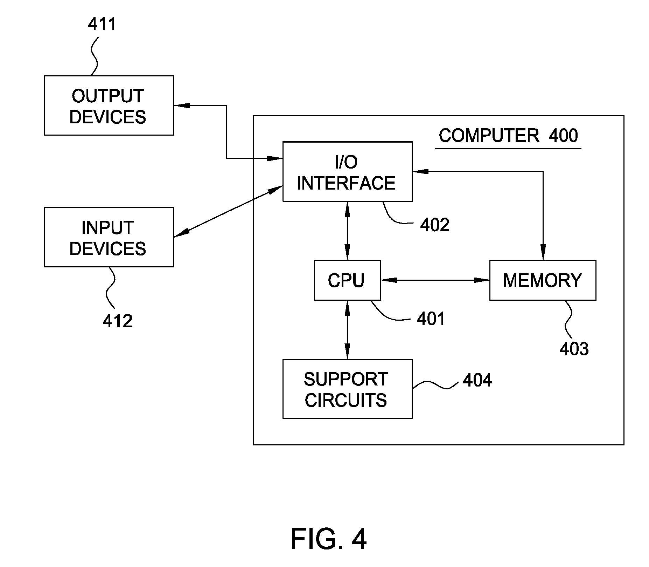

FIG. 4 is a block diagram depicting an exemplary embodiment of a computer 400 suitable for implementing the processes and methods described herein. The computer 400 may be used to implement the server 214 of FIG. 2. The computer 400 includes a central processing unit (CPU) 401, a memory 403, various support circuits 404, and an I/O interface 402. The CPU 401 may be any type of microprocessor known in the art. The support circuits 404 for the CPU 401 include conventional cache, power supplies, clock circuits, data registers, I/O interfaces, and the like. The I/O interface 402 may be directly coupled to the memory 403 or coupled through the CPU 401. The I/O interface 402 may be coupled to various input devices 412 and output devices 411, such as a conventional keyboard, mouse, printer, display, and the like.

The memory 403 may store all or portions of one or more programs and/or data to implement the processes and methods described herein. Notably, the memory 403 may store voice recognition software to process voice commands from a subscriber or parse voicemail messages to obtain return phone numbers, as described above. Although one or more aspects of the invention are disclosed as being implemented as a computer executing a software program, those skilled in the art will appreciate that the invention may be implemented in hardware, software, or a combination of hardware and software. Such implementations may include a number of processors independently executing various programs and dedicated hardware, such as ASICs.

The computer 400 may be programmed with an operating system, which may be OS/2, Java Virtual Machine, Linux, Solaris, Unix, Windows, Windows95, Windows98, Windows NT, and Windows2000, WindowsME, and WindowsXP, among other known platforms. At least a portion of an operating system may be disposed in the memory 403. The memory 403 may include one or more of the following random access memory, read only memory, magneto-resistive read/write memory, optical read/write memory, cache memory, magnetic read/write memory, and the like, as well as signal-bearing media as described below.

An aspect of the invention is implemented as a program product for use with a computer system. Program(s) of the program product defines functions of embodiments and can be contained on a variety of signal-bearing media, which include, but are not limited to: (i) information permanently stored on non-writable storage media (e.g., read-only memory devices within a computer such as CD-ROM or DVD-ROM disks readable by a CD-ROM drive or a DVD drive); (ii) alterable information stored on writable storage media (e.g., floppy disks within a diskette drive or hard-disk drive or read/writable CD or read/writable DVD); or (iii) information conveyed to a computer by a communications medium, such as through a computer or telephone network, including wireless communications. The latter embodiment specifically includes information downloaded from the Internet and other networks. Such signal-bearing media, when carrying computer-readable instructions that direct functions of the invention, represent embodiments of the invention.

While the foregoing is directed to embodiments of the present invention, other and further embodiments of the invention may be devised without departing from the basic scope thereof, and the scope thereof is determined by the claims that follow.

## Claims

1. A method of establishing a call in a packet network, comprising:
receiving a first call to a virtual phone number;
receiving at least one voice command in response to the first call;
identifying a requested phone number in response to the at least one voice command; and
initiating a second call to the requested phone number.

2. The method of claim 1, further comprising:
providing voice mail data in response to the at least one voice command;
wherein the requested number is associated with an originator of a voicemail message in the voicemail data.

3. The method of claim 2, wherein the step of identifying comprises:
scanning the voicemail message using a voice recognition process to obtain the requested number.

4. The method of claim 1, wherein the step of identifying comprises:
parsing personal contact data associated with the virtual phone number and registered with the packet network to obtain the requested phone number.

5. The method of claim 4, wherein the personal contact data comprises a plurality of names associated with a respective plurality of phone numbers, and wherein the at least one voice command comprises an instruction to call a name of the plurality of names.

6. The method of claim 5, wherein the step of identifying further comprises:
processing the instruction using a voice recognition process to obtain the name.

7. The method of claim 1, wherein the packet network comprises a voice-over-internet protocol (VOIP) network.

8. Apparatus for establishing a call in a packet network, comprising:
means for receiving a first call to a virtual phone number;
means for receiving at least one voice command in response to the first call;
means for identifying a requested phone number in response to the at least one voice command; and
means for initiating a second call to the requested phone number.

9. The apparatus of claim 8, further comprising:
means for providing voicemail data in response to the at least one voice command;
wherein the requested number is associated with an originator of a voicemail message in the voice mail data.

10. The apparatus of claim 9, wherein the means for identifying comprises:
means for scanning the voicemail message using a voice recognition process to obtain the requested number.

11. The apparatus of claim 8, wherein the means for identifying comprises:
means for parsing personal contact data associated with the virtual phone number and registered with the packet network to obtain the requested phone number.

12. The apparatus of claim 11, wherein the personal contact data comprises a plurality of names associated with a respective plurality of phone numbers, and wherein the at least one voice command comprises an instruction to call a name of the plurality of names.

13. The apparatus of claim 12, wherein the means for identifying further comprises:
means for processing the instruction using a voice recognition process to obtain the name.

14. The apparatus of claim 8, wherein the packet network comprises a voice-over-internet protocol (VOIP) network.

15. A computer readable medium having stored thereon instructions that, when executed by a processor, cause the processor to perform a method of establishing a call in a packet network, comprising:
receiving a first call to a virtual phone number;
receiving at least one voice command in response to the first call;
identifying a requested phone number in response to the at least one voice command; and
initiating a second call to the requested phone number.

16. The computer readable medium of claim 15, further comprising:
providing voicemail data in response to the at least one voice command;
wherein the requested number is associated with an originator of a voicemail message in the voice mail data.

17. The computer readable medium of claim 16, wherein the step of identifying comprises:
scanning the voicemail message using a voice recognition process to obtain the requested number.

18. The computer readable medium of claim 15, wherein the step of identifying comprises:
parsing personal contact data associated with the virtual phone number and registered with the packet network to obtain the requested phone number.

19. The computer readable medium of claim 18, wherein the personal contact data comprises a plurality of names associated with a respective plurality of phone numbers, and wherein the at least one voice command comprises an instruction to call a name of the plurality of names.

20. The computer readable medium of claim 19, wherein the step of identifying further comprises:
processing the instruction using a voice recognition process to obtain the name.
